# EUROPEAN PATENT APPLICATION

(11) **EP 3 020 616 A1**
(43) Date of publication of application: **18.05.2016**
(21) Application number: 14822722.6
(22) Date of filing: 04.06.2014
(51) Int. Cl.: B62D 6/00, B62D 5/04, B62D 101/00, B62D 113/00, B62D 119/00

(54) **VEHICLE STEERING CONTROL DEVICE AND VEHICLE STEERING CONTROL METHOD**

(30) Priority: 08.07.2013 JP 2013142477
(71) Applicant: Nissan Motor Co., Ltd, Yokohama-shi, Kanagawa 221-0023 (JP)
(72) Inventor: MORIMOTO, Akira, Atsugi-shi Kanagawa 243-0123 (JP); KIKUCHI, Masahiko, Atsugi-shi Kanagawa 243-0123 (JP); OKI, Daisuke, Atsugi-shi Kanagawa 243-0123 (JP)
(74) Representative: Hoefer & Partner Patentanwälte mbB
(86) International application number: PCT/JP2014/064854
(87) International publication number: WO 2015/005026

(57) **Abstract**

A steering control device for a vehicle, the steering control device performing control of a steering device having a steering mechanism (10) configured to steer wheels (15) in accordance with a steering angle of a steering wheel and a drive unit (40) configured to provide the steering mechanism (10) with steering power for the wheels (15), the steering control device comprising: a control unit (30) configured to control the drive unit (40) to provide the steering mechanism (10) with steering power so that the vehicle travels along a target traveling route, thereby executing automatic steering control to automatically perform steering of the steering mechanism (10); a detection unit (30) configured to detect an input torque input by a steering operation; and a calculation unit (30) configured to calculate a moving average value or integrated value of the input torque on the basis of an input torque detected during a period of time from a certain time before to a current point of time, wherein the control unit (30) releases the automatic steering control when the moving average value or integrated value of the input torque is a predetermined threshold or more.

## Description

### [Technical Field]

The present invention relates to a steering control device for a vehicle and a steering control method for a vehicle.

The present application claims priority based on Patent Application No. 2013-142477 filed in Japan Patent Office on July 8, 2013. For designated countries which permit the incorporation by reference, the contents described and/or illustrated in the above application are incorporated by reference in the present application as a part of the description and/or drawings of the present application.

### [Background Art]

As a prior art, there is known a steering control device for a vehicle, which executes automatic steering control that automatically performs steering of a steering mechanism so as to guide the vehicle to a target position. In such a steering control device for a vehicle, there is known a technique of releasing the automatic steering control when a certain steering operation is detected during the automatic steering control, so that the automatic steering control can be released if the driver intervenes into the steering operation (see Patent Document 1, for example).

### [Prior Art Document]

### [Patent Document]

[Patent Document 1] JP 2007-331479 A

### [Summary of Invention]

### [Problems to be solved by Invention]

According to the prior art, however, whether to release the automatic steering control is determined merely by whether the steering operation is detected. Therefore, the automatic steering control may be released against a driver's intention, such as when the driver accidentally touches the steering wheel, for example.

Problems to be solved by the present invention include providing a steering control device for a vehicle which can appropriately control the continuation and release of automatic steering control.

### [Means for solving problems]

The present invention solves the above problems as below. In a steering control device for a vehicle which executes automatic steering control, an input torque input by a steering operation is detected and a moving average value or integrated value of the input torque is calculated on the basis of the input torque detected during a period of time from a certain time before to the current point of time. When the calculated moving average value or integrated value of the input torque is a predetermined threshold or more, the automatic steering control is released.

### [Effect of Invention]

According to the present invention, whether a driver has an intention to intervene into a steering operation can be appropriately determined on the basis of the moving average value or integrated value of the input torque during the steering operation. Therefore, the automatic steering control can be appropriately released in accordance with the driver's intention to intervene into the steering operation.

### [Brief Description of Drawings]

[Fig. 1] Fig. 1 is a schematic diagram showing a steering control device according to an embodiment of the present invention.
[Fig. 2] Fig. 2 is a diagram for explaining a method for determining whether to release automatic steering control.
[Fig. 3] Fig. 3 is a flowchart showing a steering control process according to the embodiment.
[Fig. 4] Fig. 4 is a diagram for explaining the weighting of an input torque input by a steering operation.

### [Mode(s) for Carrying out the Invention]

### «First Embodiment»

Hereinafter, embodiments of the present invention will be described with reference to the drawings. In the following descriptions, the present invention will be described by exemplifying a steering control device which is equipped in a vehicle and can guide the vehicle to a target position, such as a parking position.

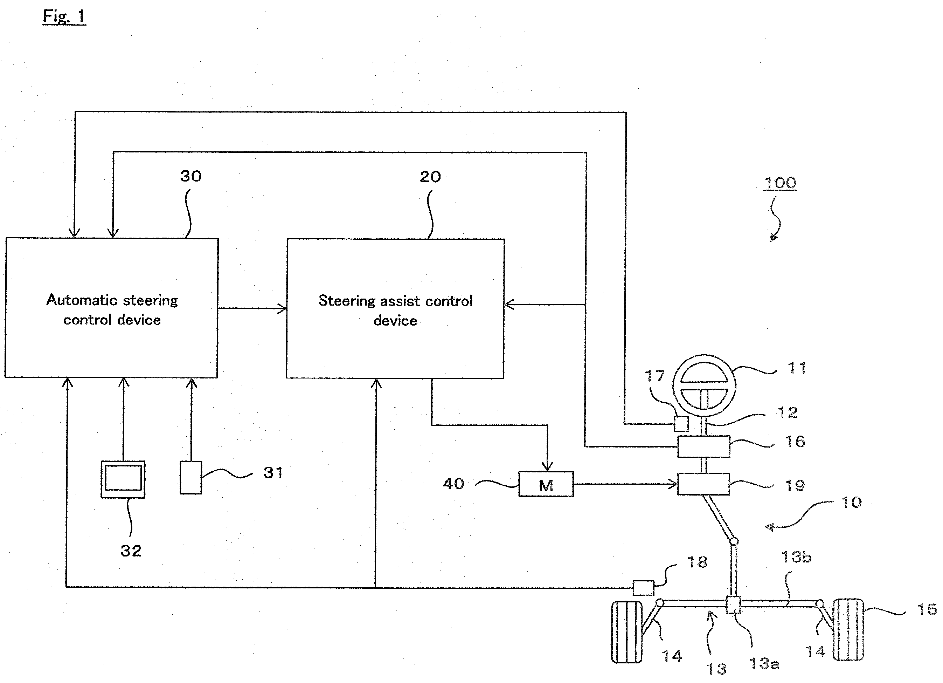

Fig. 1 is a schematic diagram which shows a steering control device 100 according to the present embodiment. As shown in Fig. 1, the steering control device 100 comprises a steering device 10, a steering assist control device 20, an automatic steering control device 30, an automatic steering control switch 31, a display 32, and an electric motor 40.

The steering device 10 has an electric power steering function. The steering device 10 steers wheels (e.g., right and left front wheels) 15 in accordance with the steering angle of a steering wheel 11 when the steering wheel 11 is operated by a driver.

Specifically in the steering device 10, a steering system between the steering wheel 11 and the wheels 15 is mechanically connected and mainly constituted of a steering shaft 12, a rack gear and pinion gear mechanism 13, and tie rods 14. The steering wheel 11 is attached to the upper end of the steering shaft 12. The rack gear and pinion gear mechanism 13 is connected with the lower end of the steering shaft 12. A pinion gear 13a is attached to the lower end of a pinion shaft connected with the steering shaft 12. The pinion gear 13a meshes with a rack gear 13b which is extended in the vehicle width direction. The rack gear and pinion gear mechanism 13 converts the rotational motion of the steering wheel 11 (steering shaft 12) into linear motion (translational motion) of the rack gear 13b. Both ends of the rack gear 13b are connected with respective knuckle arms (not shown) which are provided at the wheels 15 via the tie rods 14. The linear motion (translational motion) of the rack gear 13b allows steering of the wheels 15.

A torque sensor 16 is provided to detect a steering torque which corresponds to a steering input force by the driver. The steering torque detected by the torque sensor 16 is output to the steering assist control device 20 and the automatic steering control device 30.

A steering angle sensor 17 is provided on or near the steering shaft 12. The steering angle sensor 17 detects a rotation angle of the steering shaft 12 as a steering angle. The steering angle detected by the steering angle sensor 17 represents a steering angle of the steering wheel 11. In the present embodiment, a steering angle when steering right is output as a positive value, and a steering angle when steering left is output as a negative value, provided that the neutral position of the steering wheel 11 is represented by "0." The steering angle detected by the steering angle sensor 17 is output to the steering assist control device 20 and the automatic steering control device 30.

A vehicle speed sensor 18 is provided to detect a rotating state of the wheels 15. The vehicle speed sensor 18 thereby outputs vehicle speed pulses in accordance with the rotating state of the wheels 15. For example, the vehicle speed sensor 18 detects the rotation of a gear attached to the center of a wheel by using a magnetic sensor (not shown) and can output the vehicle speed pulses. The vehicle speed pulses are output from the vehicle speed sensor 18 to the steering assist control device 20 and the automatic steering control device 30.

The electric motor 40 converts the electric power supplied from an onboard battery (not shown) into a torque. The value of a current to be supplied to the electric motor 40 is determined by the steering assist control device 20 or the automatic steering control device 30, which will be described later. Electric power corresponding to a current value determined by the steering assist control device 20 or the automatic steering control device 30 is supplied from the onboard battery to the electric motor 40.

The electric motor 40 generates a torque in accordance with the value of a current supplied from the onboard battery. The torque generated by the electric motor 40 is transmitted to a decelerator 19. The torque transmitted to the decelerator 19 is converted into a rotating torque for the steering shaft 12. This allows to provide the steering device 10 with steering power.

The steering assist control device 20 is a device for assisting the steering operation of the steering device 10. The steering assist control device 20 comprises a microcomputer which is mainly constituted of a CPU, a ROM, a RAM, and an I/O interface. The steering assist control device 20 controls driving of the electric motor 40 in accordance with a control program stored in the ROM. The steering assist control device 20 thereby performs steering assist control to assist the steering force of the driver.

Specifically, the steering assist control device 20 has steering assist characteristics in which the relationship among a steering torque, a vehicle speed and a current command value is predetermined. The steering assist control device 20 calculates a current command value which is a target value of a current to be supplied to the electric motor 40, on the basis of the steering assist characteristics. A current command value calculated by the steering assist control device 20 to assist the steering force of the driver will be described below as a first current command value.

The onboard battery (not shown) supplies electric power corresponding to the calculated first current command value to the electric motor 40 under the control by the steering assist control device 20. In the above described manner, the steering assist control device 20 calculates the value of a current to be supplied to the electric motor 40 as the first current command value, on the basis of the steering torque and the vehicle speed. The onboard battery thus supplies the electric power to the electric motor 40 at the current of the first current command value calculated by the steering assist control device 20. The steering assist control device 20 can thereby provide the steering device 10 with steering power for assisting the steering operation of the driver.

In the present embodiment, the steering assist characteristics may be preliminarily stored in the ROM of the steering assist control device 20 in a form of a map or an arithmetic expression. The steering assist characteristics are configured such that, as the absolute value of the steering torque is lager, the absolute value of the first current command value is lager, and as the vehicle speed is higher, the absolute value of the first current command value is smaller. In the steering assist characteristics, positive or negative of the first current command value respectively depend on the steering angle and the steering angular velocity. A positive first current command value is obtained when steering in a certain direction, while a negative first current command value is obtained when steering in the other direction.

The automatic steering control device 30 is a device for automatically controlling the steering of the steering device 10 in order to guide the vehicle to a target position. The automatic steering control device 30 comprises a microcomputer which is constituted of a CPU, a ROM, a RAM, and an I/O interface. The automatic steering control device 30 controls driving of the electric motor 40 in accordance with a control program stored in the ROM. The automatic steering control device 30 thereby performs automatic steering control to automatically control the steering of the steering device 10.

In the present embodiment, when the automatic steering control switch 31 is turned on by the driver, the automatic steering control device 30 first calculates a command value of a current, as a second current command value, to be supplied to the electric motor 40 to guide the vehicle to the target position. The automatic steering control device 30 then outputs the calculated second current command value to the steering assist control device 20.

For example, in the present embodiment, an image captured by a camera is displayed on the screen of a display 32 which is disposed on the instrument panel. The driver can set a target parking position by referring to the image displayed on the screen of the display 32 and operating a touch panel provided with the display 32. After the target parking position is set by the driver, the automatic steering control device 30 calculates the positional relationship between the present position of the vehicle and the target parking position and further calculates a target traveling route for parking at the target parking position. The automatic steering control device 30 also calculates a necessary steering angle on the basis of the target traveling route and the present position of the vehicle. The automatic steering control device 30 further calculates the value of a current to be supplied to the electric motor 40 to achieve that steering angle, as the second current command value. The automatic steering control device 30 then outputs the calculated second current command value to the steering assist control device 20.

When the automatic steering control switch 31 is turned on, the automatic steering control device 30 outputs a start signal for the automatic steering control to the steering assist control device 20. The steering control mode of the steering assist control device 20 is changed to an automatic steering control mode. As a result, the electric motor 40 is supplied with electric power corresponding to the second current command value calculated by the automatic steering control device 30, under the control by the steering assist control device 20. This allows the automatic steering control based on the second current command value calculated by the automatic steering control device 30.

On the other hand, when the automatic steering control switch 31 is turned off, the automatic steering control device 30 outputs a release signal for the automatic steering control to the steering assist control device 20. The steering control mode of the steering assist control device 20 is changed to a steering assist control mode. As a result, the automatic steering control based on the current command value calculated by the automatic steering control device 30 is released (suspended, stopped), and the steering assist control based on the current command value calculated by the steering assist control device 20 is started.

In the present embodiment, when the driver intervenes into the steering operation during the automatic steering control, the automatic steering control device 30 also releases the automatic steering control. Specifically, the automatic steering control device 30 determines whether the driver intervenes into the steering operation, on the basis of the input torque detected by the torque sensor 16. There are two types of the steering operation which the torque sensor 16 can detect, i.e. a steering operation by the automatic steering control and a steering operation by the driver. In particular, the steering operation by the driver involves a case in which the driver intentionally performs the steering operation to release the automatic steering control and a case in which the steering operation is performed against the driver's intention, such as a case in which the driver accidentally touches the steering wheel. In order to appropriately control the continuation and release of the automatic steering control, it is required to appropriately determine whether the driver intentionally intervenes into the steering operation.

In the present embodiment, the automatic steering control device 30 calculates a moving average value of the input torque during a period of time from a certain time before (e.g., 300 milliseconds before) to the current point of time. When the calculated moving average value of the input torque exceeds a predetermined threshold **s,** the automatic steering control device 30 determines that the driver has an intention to intervene into the steering operation, and releases the automatic steering control. The value of the predetermined threshold **s** is not particularly limited and can be appropriately set in accordance with an experiment, etc.

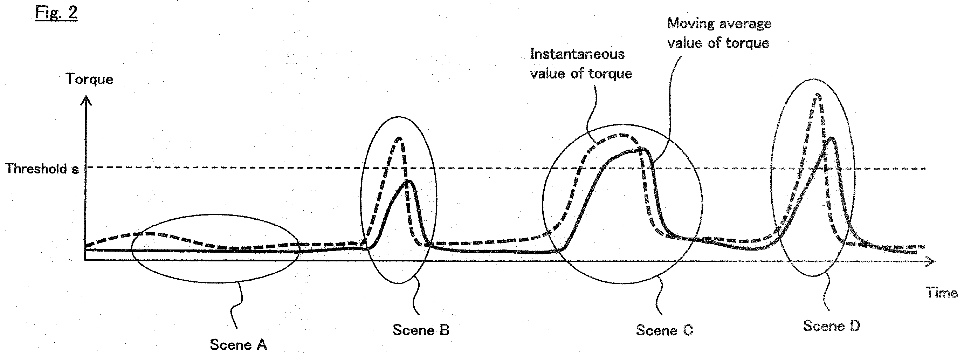

Fig. 2 is a diagram for explaining a method for releasing the automatic steering control according to the present embodiment. In Fig. 2, the instantaneous value of the input torque by the steering operation is indicated by a broken line, while the moving average value of the input torque by the steering operation is indicated by a solid line.

In a scene A of examples shown in Fig. 2, both of the instantaneous value of the input torque and the moving average value of the input torque do not exceed the threshold **s.** In this case, the automatic steering control device 30 determines that such an input torque is an input torque that results from the steering operation by the automatic steering control and is not an input torque that results from the steering operation by the driver. Therefore, the automatic steering control device 30 does not release the automatic steering control and continues the automatic steering control.

In a scene B shown in Fig. 2, the instantaneous value of the input torque exceeds the threshold **s,** but the moving average value of the input torque does not exceed the threshold **s.** In this case, the automatic steering control device 30 determines that such an input torque is an input torque that results from the steering operation by the automatic steering control or an input torque that is generated due to the driver accidentally and momentarily touching the steering wheel 11, i.e., determines that the driver has no intention to intervene into the steering operation. Therefore, the automatic steering control device 30 does not release the automatic steering control and continues the automatic steering control.

On the other hand, in a scene C shown in Fig. 2, the instantaneous value of the input torque exceeds the threshold **s,** but the instantaneous value of the input torque by the steering operation is smaller than that in a scene D, and it may be difficult to determine whether the driver has an intention to intervene into the steering operation. However, in view of the transition of the instantaneous value of the input torque in such a scene C, the input torque is continuously input, so that the moving average value of the input torque exceeds the threshold **s.** Thus, when the input torque is continuously input, it is highly possible that the driver intervenes into the steering operation. Therefore, when the moving average value of the input torque exceeds the threshold **s,** the automatic steering control device 30 determines that the driver intentionally intervenes into the steering operation, and releases the automatic steering control.

In the scene D shown in Fig. 2, the instantaneous value of the input torque is large, and the moving average value of the input torque accordingly exceeds the threshold **s.** Thus, when the instantaneous value of the input torque is large and the moving average value of the input torque exceeds the threshold **s,** the automatic steering control device 30 also determines that the driver intentionally intervenes into the steering operation, and release the automatic steering control.

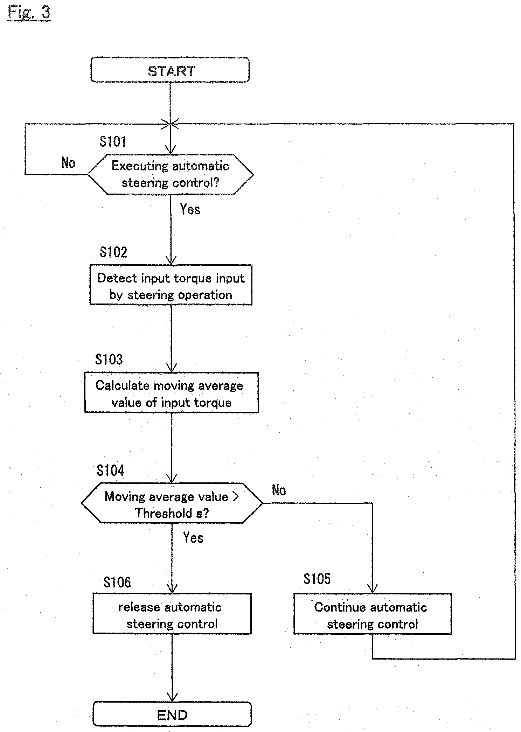

A steering control process or sequence according to the present embodiment will then be described. Fig. 3 is a flowchart for explaining the steering control process according to the present embodiment.

First, in step S101, the automatic steering control device 30 determines whether the automatic steering control is being executed. For example, the automatic steering control device 30 can determine that the automatic steering control is being executed if the automatic steering control switch 31 is turned on and the automatic steering control is not released due to the driver intervening into the steering operation. If the automatic steering control is being executed, the process proceeds to step S102. If, on the other hand, the automatic steering control is not being executed, the process waits in step S101.

In step S102, the automatic steering control device 30 performs detection of torque input by the steering operation. Specifically, the torque sensor 16 detects the torque input by the steering operation, and the input torque detected by the torque sensor 16 is transmitted to the automatic steering control device 30. The automatic steering control device 30 can thereby detect the torque input by the steering operation.

In step S103, the automatic steering control device 30 performs calculation of the moving average value of the input torque, including the most recent input torque detected in step S102, during a period of time from a certain time before to the current point of time. For example, the automatic steering control device 30 calculates the moving average value of the input torque by the steering operation, on the basis of the input torque detected during a period of time from 300 milliseconds before to the current point of time.

Then in step S104, the automatic steering control device 30 determines whether the moving average value of the input torque calculated in step S103 exceeds the threshold **s.** If the moving average value of the input torque does not exceed the threshold **s** as in the scene A and scene B shown in Fig. 2, for example, the process proceeds to step S105. On the other hand, if the moving average value of the input torque exceeds the threshold **s** as in the scene C and scene D shown in Fig. 2, the process proceeds to step S106.

In step S105, it is determined that the moving average value of the input torque does not exceed the threshold **s.** In this case, the automatic steering control device 30 continues to execute the automatic steering control. For example, when a target parking position is set by the driver via a touch panel or the like, the automatic steering control device 30 calculates a necessary steering angle for moving the vehicle to the target parking position, on the basis of the target parking position and the present position of the vehicle. The automatic steering control device 30 calculates the value of a current to be supplied to the electric motor 40 to achieve that steering angle, as a current command value. The automatic steering control device 30 transmits the calculated current command value to the steering assist control device 20. Through this operation, the electric motor 40 is supplied with electric power corresponding to the current command value under the control by the steering assist control device 20, so that the automatic steering control can be performed.

In step S104, if the moving average value of the input torque exceeds the threshold s, the process proceeds to step S106. In step S106, the automatic steering control device 30 performs a process for releasing the automatic steering control. Specifically, the automatic steering control device 30 outputs a release signal for the automatic steering control to the steering assist control device 20. Through this operation, the steering control mode of the steering assist control device 20 is changed to the steering assist control mode. As a result, the automatic steering control based on the current command value calculated by the automatic steering control device 30 is released, and the steering assist control based on the current command value calculated by the steering assist control device 20 is started.

As described above, according to the first embodiment, the moving average value of the input torque is calculated on the basis of the input torque detected during a period of time from a certain time before to the current point of time. When the calculated moving average value of the input torque exceeds the threshold **s,** the automatic steering control is released. It can be appropriately determined whether the input torque by the steering operation is an input torque which results from the steering operation by the automatic steering control, or which is generated due to the driver accidentally and momentarily touching the steering wheel 11, or which results from the driver intentionally intervening into the steering operation to release the automatic steering control. Therefore, continuation and release of the automatic steering control can be appropriately controlled.

For example, as in the scene A shown in Fig. 2, when both of the instantaneous value of the input torque and the moving average value of the input torque are not larger than the threshold **s,** it is highly possible that such an input torque is an torque that results from the steering operation by the automatic steering control. In such a case, the automatic steering control may be continued thereby to appropriately control the continuation and release of the automatic steering control.

As in the scene B shown in Fig. 2, when the instantaneous value of the input torque exceeds the threshold **s,** but the moving average value of the input torque does not exceed the threshold **s,** it is highly possible that such an input torque is an torque that results from the steering operation by the automatic steering control or an torque that is generated due to the driver accidentally and momentarily touching the steering wheel 11. In such a case, the automatic steering control may be continued thereby to appropriately control the continuation and release of the automatic steering control.

On the other hand, as in the scene D shown in Fig. 2, when the instantaneous value of the input torque is large, it is highly possible that the driver intentionally intervenes into the steering operation even if the input of the input torque by the steering operation is momentary. In such a case, the moving average value of the input torque by the steering operation also exceeds the threshold **s.** Therefore, the automatic steering control device 30 may release the automatic steering control on the basis of the moving average value of the input torque thereby to appropriately control the continuation and release of the automatic steering control.

As in the scene C shown in Fig. 2, when the instantaneous value of the input torque is at a medium level, but the input torque is continuously input, it is highly possible that the driver intentionally intervenes into the steering operation. Also in such a case, the moving average value of the input torque exceeds the threshold **s.** Therefore, the automatic steering control device 30 may release the automatic steering control on the basis of the moving average value of the input torque thereby to appropriately control the continuation and release of the automatic steering control. Consequently, it can effectively prevent the driver feels an uncomfortable feeling such as due to the steering wheel 11 moves against the driver's intention under the automatic steering control, for example, when the driver is performing the steering operation.

### «Second Embodiment»

A second embodiment of the present invention will then be described. The steering control device according to the second embodiment has a similar configuration to the steering control device 100 shown in Fig. 1. In the second embodiment, the steering control device operates in the same manner as in the first embodiment except that weighting the input torque is performed when calculating the moving average value of the input torque.

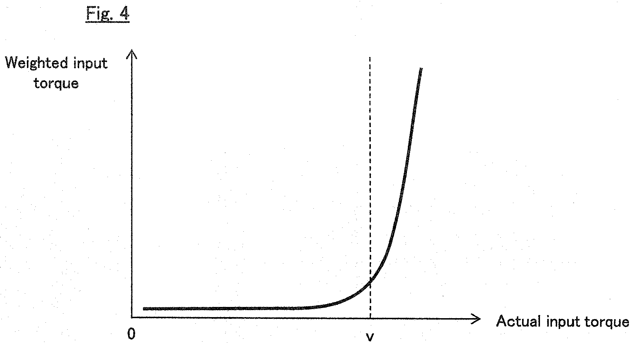

Fig. 4 is a graph which shows the relationship between an actual value of the input torque by the steering operation and a weighted value of the input torque. In Fig. 4, v represents an index value for determining whether the input torque by the steering operation is an input torque that results from the automatic steering control. The index value v may be a fixed value which is predetermined such as by using an experiment, or may also be the maximum value of the input torque to be input by the automatic steering control.

In the second embodiment, when the input torque by the steering operation is smaller than the index value **v** shown in Fig. 4, the automatic steering control device 30 determines that the input torque by the steering operation is a torque that results from the automatic steering control. In this case, the automatic steering control device 30 performs the weighting for the actual value of the input torque so that the weighted value of the input torque will be substantially zero.

On the other hand, when the input torque by the steering operation is not smaller than the index value v shown in Fig. 4, the automatic steering control device 30 determines that the input torque by the steering operation is a torque that results from the steering operation of the driver. In this case, the automatic steering control device 30 performs the weighting for the actual value of the input torque so that the weighted value of the input torque will be larger than the actual value of the input torque.

The automatic steering control device 30 then calculates the moving average value of the input torque by the steering operation, on the basis of the weighted input torque as shown in Fig. 4. The automatic steering control device 30 determines whether to release the automatic steering control, on the basis of the calculated moving average value of the input torque. The method for determining whether to release the automatic steering control on the basis of the moving average value of the input torque is the same as that in the first embodiment, and the description will therefore be omitted.

As described above, according to the second embodiment, when the actual value of the input torque by the steering operation is smaller than the index value v, the weighting the input torque is performed by the steering operation so that the weighted value of the input torque will be substantially zero. Through this operation, when determining whether to release the automatic steering control on the basis of the moving average value of the input torque, it can be more appropriately determined whether the input torque by the steering operation results from the automatic steering control. Therefore, the continuation and release of the automatic steering control can be more appropriately controlled.

Embodiments heretofore explained are described to facilitate understanding of the present invention and are not described to limit the present invention. Therefore, it is intended that the elements disclosed in the above embodiments include all design changes and equivalents to fall within the technical scope of the present invention.

For example, the above-described embodiments exemplify a configuration in which whether to release the automatic steering control is determined on the basis of the moving average value of the input torque by the steering operation. However, the present invention is not limited to this configuration. For example, whether to release the automatic steering control may be determined by deciding whether an integrated value of the input torque during a period of time from a certain time before to the current point of time is a predetermined value or more.

Moreover, the above-described embodiments exemplify a scene in which the vehicle is guided to a target parking position, to describe the present invention. However, the present invention should not be understood as being applicable only to the above scene. For example, the present invention can also be applied to a scene in which automatic traveling is performed such that a vehicle automatically travels to follow a forward vehicle.

In the above-described embodiments, the steering device 10 corresponds to the steering mechanism in the present invention, the electric motor 40 corresponds to the drive unit in the present invention, and the automatic steering control device 30 corresponds to the control unit, calculation unit and detection unit in the present invention.

### [Description of Reference Numerals]

- 100: Steering control device
- 10: Steering device
16... Torque sensor
17... Steering angle sensor
18... Vehicle speed sensor
- 20: Steering assist control device
- 30: Automatic steering control device
- 31: Automatic steering control switch
- 32: Display
- 40: Electric motor

## Claims

1. A steering control device for a vehicle, the steering control device performing control of a steering device having a steering mechanism configured to steer wheels in accordance with a steering angle of a steering wheel and a drive unit configured to provide the steering mechanism with steering power for the wheels,
the steering control device comprising:
a control unit configured to control the drive unit to provide the steering mechanism with steering power so that the vehicle travels along a target traveling route, thereby executing automatic steering control to automatically perform steering of the steering mechanism;
a detection unit configured to detect an input torque input by a steering operation; and
a calculation unit configured to calculate a moving average value or integrated value of the input torque on a basis of an input torque detected during a period of time from a certain time before to a current point of time, wherein
the control unit releases the automatic steering control when the moving average value or integrated value of the input torque is a predetermined threshold or more.

2. The steering control device for a vehicle according to claim 1, wherein the calculation unit is further configured to:
perform weighting of the input torque to decrease a value of the input torque when the value of the input torque is less than a predetermined value; and
perform weighting of the input torque to increase a value of the input torque when the value of the input torque is the predetermined value or more.

3. The steering control device for a vehicle according to claim 2, wherein the predetermined value is an index value for determining whether a value of the input torque results from a steering operation by the automatic steering control.

4. A steering control method for a vehicle, comprising:
detecting an input torque input by a steering operation when automatic steering control is executed to automatically perform steering of a steering mechanism; and
determining whether to release the automatic steering control on a basis of an input torque detected during a period of time from a certain time before to a current point of time.
